# EUROPEAN PATENT SPECIFICATION

(11) **EP 1 170 080 B1**
(45) Date of publication and mention of the grant of the patent: **21.05.2003**
(21) Application number: 01113527.4
(22) Date of filing: 12.06.2001
(51) Int. Cl.: B23B 49/02, B23Q 11/00

(54) **Drilling jig**
Bohrschablone
Gabarit de perçage

(30) Priority: 06.07.2000 IT MI001522
(43) Date of publication of application: 09.01.2002
(73) Proprietor: Platti, Fabrizio, 23814 Cassina Valsassina (IT)
(72) Inventor: Platti, Fabrizio, 23814 Cassina Valsassina (IT)
(74) Representative: Gislon, Gabriele

(56) References cited:
- CH-A- 683 677
- US-A- 5 429 333
- US-A- 5 807 034

## Description

The present invention concerns a type of drilling jig for walls, which includes a support plate, temporary anchorage means to fix it to the wall to be drilled, and at least one hole matrix to guide a successive wall drilling operation.

For the precision mounting, on a generally vertical wall, of objects with fixing parts in preset positions, e.g. electric panels, it is common practice to use drilling jigs with temporary anchorage means to fix it to the wall and a number of guide holes, or a hole matrix, which allows the positioning and operation of a drilling tool, such as a drill. The jig holes are arranged according to the linear correspondence that exists between the positions of the fixing parts of the object to be mounted, so that these jig holes locate the exact points at which it is possible to constrain the fixing parts of the object on the wall.

During use, the operator must fix the jig to the vertical wall at the exact position in which the object is to be mounted. Then, with a suitable drilling tool, drill through the jig holes to make the corresponding holes in the wall to take screws, or other support means, to put up the object.

In these drilling jigs, the guide holes can be made on an appropriate interchangeable matrix attached to a support plate of the jig itself, so that different sized objects can be mounted simply by changing the matrix on which the holes are made, thus adjusting the jig to the object.

In addition, certain embodiments of such jigs have wall anchorage means which do not damage the same wall.

In particular, drilling jigs are known in which the temporary wall anchorage means include an adjustable floor stand, namely a telescopic stand or tripod. Nevertheless, such jigs require an extremely even surface and often prove unstable. Moreover, positioning them in relation to the vertical wall is very difficult.

In other known types of drilling jigs, the anchorage means include some suction cups which, fixed to the jig support plate, adhere to the vertical wall on which the holes need to be made. However, the use of suction cups allows the accurate fixing of the jig to the vertical wall only if the wall is extremely smooth. Otherwise the suction cups come off easily, or do not provide the adherence necessary to support the jig. Besides, the material used to make the suction cups gradually loses its elastic properties, forcing the operator to replace them.

Embodiments of drilling jigs are also known in which the means of wall anchorage include a suction device which is fluid connected to a hollow made in the drilling jig and capable of adhering to the wall.

Such a device, which corresponds to the preamble of claim 1, is e.g. known from CH 683677 A.

In these embodiments, the suction device is started after positioning the jig on the wall, a suction pressure is quickly created within the airtight hollow which temporarily fixes the jig to the wall.

Such embodiments, though allowing the jig to be positioned with considerable accuracy, are still not widespread, since their use on plaster covered walls can often lead to the suction device pulling plaster off the wall, the separation of the device from the wall and/or damage to the wall of the building.

In addition, having basically created a vacuum in the airtight hollow, continuous operation of the suction device usually operated by an electric motor, causes the latter to overheat leading to the risk of permanent damage to the device.

One aim of the present invention is to make a drilling jig which, by solving the problems of the aforesaid known technique, is both reliable and easy to use.

Another aim of the present invention is to prepare a drilling jig that allows precise drillings to be made even on vertical walls with rough surfaces without, for this reason, damaging the wall.

These and other aims are achieved by the drilling jig, according to the first independent claim and the following dependent claims.

The drilling jig, according to the present invention, includes a support plate, means to temporarily fix the support plate to a wall and at least one hole matrix. The means to temporarily fix the support plate include at least one suction device and at least one airtight hollow adhering to the wall and integral with the support plate. This hollow is fluid connected to the suction device. Furthermore, the drilling jig includes means for the automatic control of the suction capacity and/or the suction pressure produced by the suction device.

According to a preferential aspect of the present invention, the automatic control means are connected to at least one direct or indirect measuring component of the plate-to-wall adherence conditions, to receive one or more corresponding signals from the same measuring component at the measured conditions.

In a preferred embodiment of the present invention, such a measuring component is a measurement sensor of the pressure in the airtight hollow. Besides, the means for the automatic control also include means to vary the operating speed of the suction device, based on the signals coming from such pressure measurement sensor.

According to another aspect of the present invention, the means to vary the operating speed of the suction device can be set to keep the pressure constant in the airtight hollow.

In a preferential embodiment of the present invention, the suction device forms an integral part of the jig support plate.

According to an additional aspect of the invention, the support plate is made of a basically flexible material and the hole matrix includes means to vary the linear arrangement of such holes.

There follows the description of some preferential embodiments of the present invention, as non-limiting examples, with the aid of the figures enclosed, in which:
figures 1, 2, 3 are front, rear and side views, respectively, of a drilling jig according to a particular aspect of the present invention;
figure 4 is a front view of an adjustable hole matrix according to another aspect of the present invention;
figure 5 is a perspective view of another different embodiment of the present invention; and
figure 6 is a front view of an additional embodiment of the present invention.

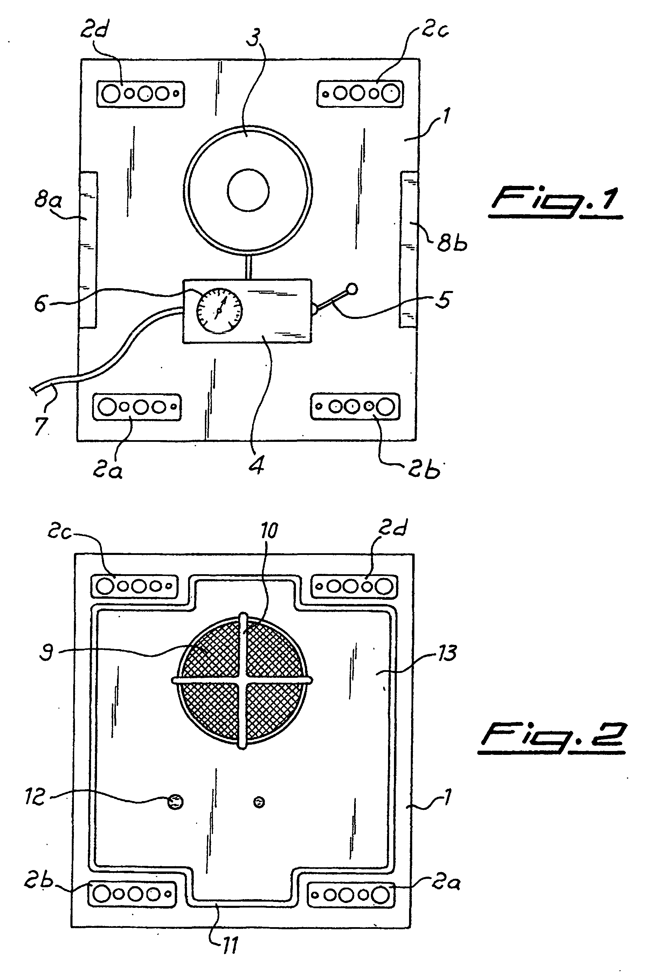

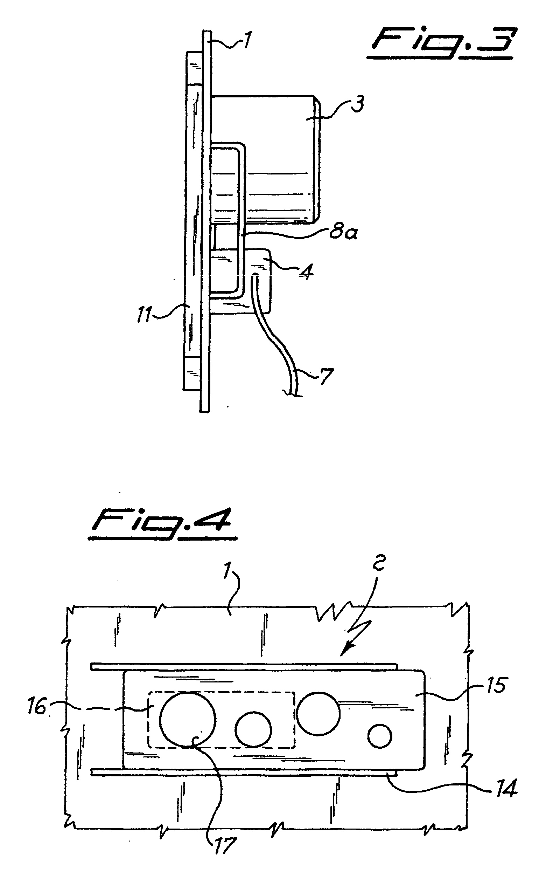

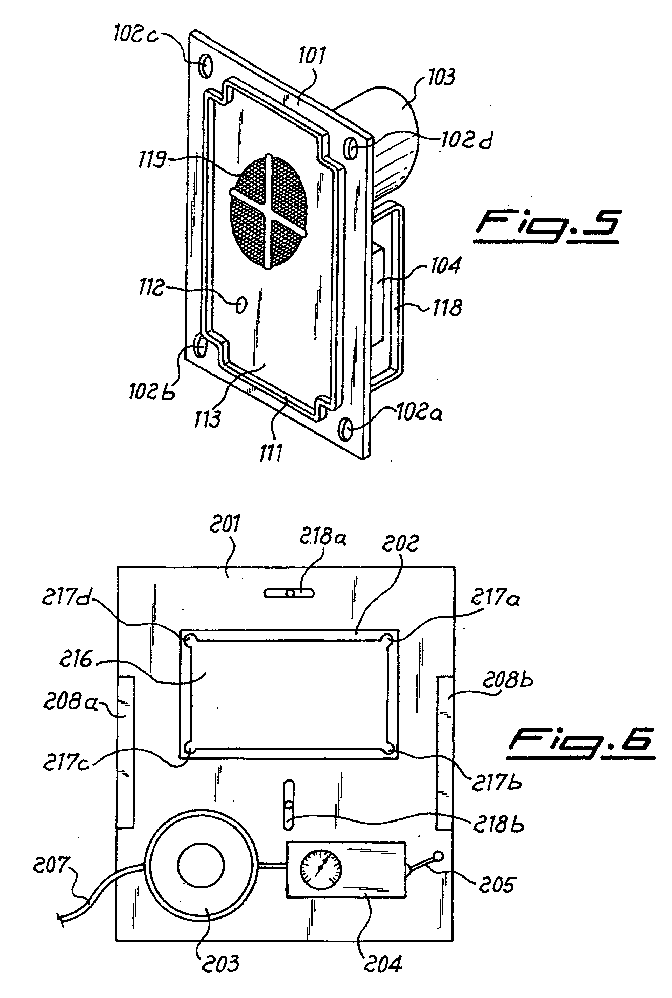

With reference to figures 1 to 3, the drilling jig represented includes a support plate 1, preferably sheet steel or aluminium, which is integral with the drilling matrixes 2a, 2b, 2c, 2d at the corners of the same plate 1. The matrixes 2a, 2b, 2c, 2d each have a number of holes in a mutual and predefined linear correspondence which act as a mark for the subsequent drilling of the wall.

In particular, each matrix 2a, 2b, 2c, 2d has a preset number of holes with different dimensions and position, capable of obtaining drilling marks for mounting different sized objects without, for this reason, having to replace the matrixes.

The drilling jig also has an electrically operated suction device 3 with, for example, a rotor operated by a direct current motor, powered through cable 7 by the mains power in the building. In other embodiments, the suction device 3 can be of a type which includes a Venturi tube connected to a compressed air flow and/or can be battery powered.

According to the particular embodiment illustrated, the suction device 3 is an integral part of the front face of the support plate 1, thus making the illustrated drilling jig particularly compact and portable. Besides, this jig proves especially suitable for use on walls without power sockets, in which case the suction device 3 is advantageously battery powered.

In other drilling jig embodiments, according to the invention (not shown), the suction device 3 may be separate from plate 1, but which may be simply connected to it.

The support plate 1, on its front face, also has means 4 for the automatic control of the suction pressure created by the device 3 including, in turn, a control lever 5.

In particular, the automatic control means 4 can include, in turn, means to vary the operating speed of the suction device 3, acting on the basis of one or more signals coming from appropriate sensors of the adherence conditions of the plate on the wall to be drilled. When the jig is equipped with adherence condition sensors 12 (figure 2) able to measure the pressure produced between plate 1 and the wall, the means 4 can be connected to a manometer 6.

The means to vary the operating speed of the suction device 3, for example connected to one or more pressure detection sensors 12, can also be set to maintain a constant pressure between plate 1 and the wall, at a value which is preset by the jig manufacturer or operator.

In an additional embodiment, not shown, the automatic control means 4, and therefore the means to vary the operating speed of the suction device 3, can be connected to sensors of the operating conditions of the same suction device 3, so as to vary the operating speed of the latter based on the parameters relating to the operation itself, e.g. temperature.

In addition, the support plate 1 has two front handles 8a, 8b allowing the drilling jig to be positioned on the wall where the holes are to be made.

The rear face of plate 1, illustrated in figure 2, includes a hollow 13 delimited by the seals 11 which ensure an airtight seal during use when the hollow 13 is joined to the wall to be drilled. The seals 11 are made of an impermeable elastic material, namely rubber or other synthetic material.

Appropriately, especially in large size drilling jigs, the hollow 13 may contain some deformable elastic wall support parts, e.g. some additional seals, which serve the purpose of exerting mechanical pressure, during the suction stage, on the plaster of the wall itself. Such deformable parts, not shown, do not substantially influence the suction, but can contribute mechanically in preventing the detachment of undesired pieces of plaster.

Besides, hollow 13 may have some additional guide holes (not shown), surrounded by seals to ensure the flow separation between such holes and the hollow itself 13.

This airtight hollow 13 is fluid connected to the suction device 3 by a connection port, if necessary of variable structure, which can be protected by a filtering disc 9, held by a grille 10, which prevents drilling dust accidentally entering the same suction device 3.

Within the airtight hollow 13, according to a preferential aspect of the present invention, are one or more sensors 12 for the measurement of the pressure in the same hollow 13. The pressure sensor 12 is connected to the automatic control means 4, so as to provide the latter with one or more signals, preferably electrical, corresponding to the pressure measurement(s).

In alternative embodiments, not shown, the pressure sensor 12 can be replaced by any other direct or indirect measuring means of the plate 1 adherence conditions to the wall, and especially the conditions present in the hollow 13, for instance some means to measure the distance between plate 1 and the wall to be drilled.

Moreover, it is expedient that the material used to make support plate 1 is basically elastic, so that plate 1, and its airtight hollow 13 in particular, can adapt, by bending, to any irregular configurations of the walls to which the jig is applied.

During use the operator, after positioning the plate 1 on the wall to be drilled, using the handles 8a, 8b, pushes the control lever 5 which starts the suction device 3 controlled by means 4.

Switching on the device 3 produces a suction pressure within the hollow 13 which keeps the drilling jig adhered to the wall. At the same time, the sensor 12 instantly measures the pressure present in hollow 13 and converts this measurement into a corresponding signal that is sent to the control means 4.

The control means 4 measure the signal coming from sensor 12 and, based on this signal, can emit a corresponding command signal sent to the means to vary the operating speed of the suction device 3. This command signal is sent only if the signal coming from the pressure sensor falls outside preset limits corresponding to pressure conditions that are considered optimum. That is, if the pressure measured by sensor 12 exceeds the predefined value, the means 4 produce an increase in the operating speed of the suction device 3 to reduce the pressure (or increase the suction pressure) in the hollow 13, whereas if the pressure measured is less than the predefined value, the means 4 induce a reduction in the operating speed of the device 3 so as to increase the pressure (or decrease the suction pressure) in the hollow 13.

The instant measurement of the adherence conditions of plate 1, at the wall to be drilled and the consequent control of the suction device 3 operation, can prevent excessive suction pressure damaging the plaster of the wall to be drilled and/or the suction device 3 itself or that insufficient suction pressure prevents effective use of the drilling jig.

Figure 4 illustrates a particular hole matrix 2, for example usable in the jig represented in figures from 1 to 3, in which the arrangement of the guide holes and their dimensions, with respect to plate 1, can be changed by the operator.

In particular, plate 1 has a window 16 to which slide tracks 14 are fixed and into which a hole matrix 15 can be slotted. The hole matrix 15 has a number of guide holes 17, the position of which, in relation to window 16, can be adjusted by the user.

Use of such an adjustable matrix 15 for each of the slots 2a, 2b, 2c, 2d envisaged in the embodiment of figures 1, 2 and 3 allows the operator to vary the mutual linear arrangement of the holes at the ends of plate 1. Figure 5, illustrates an additional drilling jig embodiment, according to the present invention, including a support plate 101 which includes, on its front face, a suction device 103, automatic control means 104 and a pair of handles 108 and, on its rear face, an airtight hollow 113, defined by seals 111 and fluid connected by the port 119, if necessary of variable structure to device 103, in addition to sensors 112 to measure the adherence conditions of plate 101 at the wall to be drilled.

In addition, the jig is equipped with a hole matrix made up of four guide holes 102a, 102b, 102c, 102d located at the ends of the same plate 101.

Figure 6 shows, in a front view, another drilling jig embodiment, according to the present invention.

Such a jig has a support plate 201, a suction device 203, automatic control means 204 of the device 203 and two positioning handles 208a, 208b.

The support plate 201 has a central window 216 at which a hole matrix 202 is assembled, having the guide holes 217a, 217b, 217c, 217d located at the end corners. Such a jig 202, fixed to plate 201 in a removable way, can be easily replaced to allow the adjustment of the guide holes to the different objects to mount on the wall.

In addition, the illustrated jig has two spirit levels 218a, 218b allowing the extremely precise positioning of the support plate on the wall to be drilled.

The use of means for the automatic control of the suction pressure produced by the suction device in the drilling jig, according to the present invention, results in a reliable drilling jig that is easy to use, which solves the aforesaid jig problems of known technique.

Moreover, the advantageous use of pressure sensors results in a drilling jig which is easily produced and which offers high operating precision.

## Claims

1. A drilling jig of the type which includes a support plate (1), means to temporarily fix said support plate to a wall and at least one hole matrix (2a-d), said means to temporarily fix the support plate having at least one suction device (3) and at least one hollow (13) forming an airtight seal with said wall and integral with said support plate, said at least one airtight hollow being fluid connected to said suction device, and **characterised in that** said drilling jig includes means for the automatic control (4) of the suction capacity and/or suction pressure produced by said suction device.

2. A drilling jig, according to claim 1, **characterised in that** said automatic control means are connected to at least one measurement sensor of the adherence conditions of said plate at the wall, to receive one or more signals corresponding to the conditions measured by said sensor.

3. A drilling jig, according to claim 2, **characterised in that** said at least one measurement component of the adherence conditions is a pressure measurement sensor in said airtight hollow(s) that provides one or more signals corresponding to the measurement of said pressure.

4. A drilling jig, according to claim 2 or 3, **characterised in that** said automatic control means include means to vary the operating speed of the suction device, based on the signal or signals coming from said measurement sensor(s).

5. A drilling jig, according to claim 4, **characterised in that** said means to vary the operating speed of the suction device can be set to maintain, in time, a constant pressure in said airtight hollow.

6. A drilling jig, according to any one of the previous claims, **characterised in that** said hole matrix(es) is/are assembled on said support plate in a removable way.

7. A drilling jig, according to any one of the previous claims, **characterised in that** said hole matrix includes means to vary the linear arrangement and/or dimensions of said holes.

8. A drilling jig, according to any one of the previous claims, **characterised in that** said at least one airtight hollow has walls including airtight elastic seals fixed to the support plate.

9. A drilling jig, according to any one of the previous claims, **characterised in that** it includes one or more deformable elastic wall support parts fixed within said airtight hollow.

10. A drilling jig, according to any one of the previous claims, **characterised in that** said suction device is integrally assembled to said support plate.

11. A drilling jig, according to any one of the previous claims, **characterised in that** said support plate is made of a substantially elastic material.

## Patentansprüche

1. Bohrschablone des Typs, der eine Halteplatte (1), Mittel zum zeitweiligen Befestigen der genannten Halteplatte an einer Wand und zumindest ein Lochmuster (2a-d) umfasst, wobei die genannten Mittel zum zeitweiligen Befestigen der Halteplatte zumindest eine Saugvorrichtung (3) und zumindest einen Hohlraum (13) aufweisen, der eine luftdichte Abdichtung mit der genannten Wand bildet und einstückig mit der genannten Hatteptatte ist, wobei der genannte zumindest eine luftdichte Hohlraum pneumatisch mit der genannten Saugvorrichtung verbunden ist,
**dadurch gekennzeichnet,**
**dass** die genannte Bohrschablone Mittel zur automatischen Regelung (4) der Saugkapazität der Saugvorrichtung und/oder des von ihr erzeugten Ansaugdrucks umfasst.

2. Bohrschablone nach Anspruch 1,
**dadurch gekennzeichnet,**
**dass** die genannten automatischen Regelungsmittel mit zumindest einem Meßsensor für die Haftfestigkeitsbedingungen der genannten Platte an der Wand gekoppelt sind, um ein oder mehr Signale zu empfangen, die mit den vom Sensor gemessenen Bedingungen korrespondieren.

3. Bohrschablone nach Anspruch 2,
**dadurch gekennzeichnet,**
**daß** das genannte zumindest eine Meßbauteil für die Haftfestigkeitsbedingungen ein Druckmeßsensor in dem genannten Hohlraum oder in den genannten Hohlräumen ist, der ein oder mehr Signale bereitstellt, die mit der Messung des genannten Drucks korrespondieren.

4. Bohrschablone nach Anspruch 2 oder 3,
**dadurch gekennzeichnet,**
**dass** die genannten automatischen Regelungsmittel Mittel umfassen, um die Betriebsdrehzahl der Saugvorrichtung auf der Basis des/der von dem/den genannten Messsensor(en) erhaltenen Signals/Signale zu verändem.

5. Bohrschablone nach Anspruch 4,
**dadurch gekennzeichnet,**
**dass** die genannten Mittel zum Verändern der Betriebsdrehzahl der Saugvorrichtung so eingestellt werden können, daß rechtzeitig ein konstanter Druck in dem genannten luftdichten Hohlraum aufrecht erhalten wird.

6. Bohrschablone nach einem der vorhergehenden Ansprüche,
**dadurch gekennzeichnet,**
**dass** das/die genannte(n) Lochmuster abnehmbar auf der genannten Halteplatte angebracht ist/sind.

7. Bohrschablone nach einem der vorhergehenden Ansprüche,
**dadurch gekennzeichnet,**
**dass** das genannte Lochmuster Mittel zum Verändern der linearen Anordnung und/oder der Abmessungen der genannten Löcher beinhaltet.

8. Bohrschablone nach einem der vorhergehenden Ansprüche,
**dadurch gekennzeichnet,**
**dass** der genannte zumindest eine luftdichte Hohlraum Wände aufweist, die luftdichte elastische Dichtungen umfassen, die an der Halteplatte befestigt sind.

9. Bohrschablone nach einem der vorhergehenden Ansprüche,
**dadurch gekennzeichnet,**
**dass** sie ein oder mehrere verformbare elastische Wandabstützteile umfasst, die innerhalb des genannten luftdichten Hohlraums befestigt sind.

10. Bohrschablone nach einem der vorhergehenden Ansprüche,
**dadurch gekennzeichnet,**
**dass** die genannte Saugvorrichtung einstückig mit der genannten Halteplatte ausgeführt ist.

11. Bohrschablone nach einem der vorhergehenden Ansprüche,
**dadurch gekennzeichnet,**
**dass** die genannte Halteplatte aus einem im wesentlichen elastischen Werkstoff hergestellt ist.

## Revendications

1. Gabarit de perçage du type qui comprend une plaque de support (1), des moyens pour fixer temporairement ladite plaque de support à un mur et au moins une matrice de trous (2a à d), lesdits moyens pour fixer temporairement la plaque de support ayant au moins un dispositif d'aspiration (3) et au moins un creux (13) formant un joint étanche à l'air avec ledit mur et intégré à ladite plaque de support, ledit au moins un creux étanche à l'air étant relié de manière fluide audit dispositif d'aspiration, et **caractérisé en ce que** ledit gabarit de perçage comprend des moyens pour le contrôle automatique (4) de la capacité d'aspiration et/ou pression d'aspiration produite par ledit dispositif d'aspiration.

2. Gabarit de perçage, selon la revendication 1, **caractérisé en ce que** lesdits moyens de contrôle automatique sont reliés à au moins un capteur de mesurage des conditions d'adhérence de ladite plaque au mur, pour recevoir un ou plusieurs signaux correspondant aux conditions mesurées par ledit capteur.

3. Gabarit de perçage, selon la revendication 2, **caractérisé en ce que** ledit au moins un composant de mesurage des conditions d'adhérence est un capteur de mesurage de pression dans le(s)dit(s) creux étanche(s) à l'air qui fournit un ou plusieurs signaux correspondant au mesurage de ladite pression.

4. Gabarit de perçage, selon la revendication 2 ou 3, **caractérisé en ce que** lesdits moyens de contrôle automatique comprennent des moyens pour varier la vitesse de fonctionnement du dispositif d'aspiration, sur la base du signal ou des signaux provenant dudit/desdits capteur(s) de mesurage.

5. Gabarit de perçage, selon la revendication 4, **caractérisé en ce que** lesdits moyens pour varier la vitesse de fonctionnement du dispositif d'aspiration peuvent être réglés pour maintenir, dans le temps, une pression constante dans ledit creux étanche à l'air.

6. Gabarit de perçage, selon l'une quelconque des revendications précédentes, **caractérisé en ce que** ladite/lesdites matrice(s) de trous est/sont assemblée(s) sur ladite plaque de support de manière amovible.

7. Gabarit de perçage selon l'une quelconque des revendications précédentes, **caractérisé en ce que** ladite matrice de trous comprend des moyens pour varier les agencement linéaire et/ou dimensions desdits trous.

8. Gabarit de perçage, selon l'une quelconque des revendications précédentes, **caractérisé en ce que** ledit au moins creux étanche à l'air a des parois comprenant des joints élastiques étanches à l'air fixés à la plaque de support.

9. Gabarit de perçage, selon l'une quelconque des revendications précédentes, **caractérisé en ce qu'**il comprend une ou plusieurs pièces de support mural élastiques déformables fixées à l'intérieur dudit creux étanche à l'air.

10. Gabarit de perçage, selon l'une quelconque des revendications précédentes, **caractérisé en ce que** ledit dispositif d'aspiration est intégralement assemblé à ladite plaque de support.

11. Gabarit de perçage selon l'une quelconque des revendications précédentes, **caractérisé en ce que** ladite plaque de support est faite d'un matériau sensiblement élastique.
